# EUROPEAN PATENT APPLICATION

(11) **EP 3 778 522 A1**
(43) Date of publication of application: **17.02.2021**
(21) Application number: 19191565.1
(22) Date of filing: 13.08.2019
(51) Int. Cl.: C04B 28/00, C04B 28/12, C04B 28/10, C09D 1/10, C04B 18/24

(54) **SYSTEM AND METHOD FOR THE PRODUCTION OF ECO-FRIENDLY CONSTRUCTION MATERIALS**

(71) Applicant: RiceHouse srl, 13811 Andorno Micca (BI) (IT)
(72) Inventor: Colombo, Alessio, 13811 Andorno Micca (IT)
(74) Representative: Rausch Wanischeck-Bergmann Brinkmann

(57) **Abstract**

To provide a system and a method for the production of eco-friendly construction materials which has most of the a.m. properties, are simple to produce, simple to handle and provides a very positive environmental balance and is adaptable to new construction methods an inventive system for the production of eco-friendly construction materials consisting of lime, water, a binder and a filler material as a natural building material, wherein the filler material consists of at least one of rice straw, rice husk, rice husk ashes and/or rice bran is provided.

## Description

The present invention refers to a system and a method for the production of eco-friendly construction materials.

Building material is any material used for construction purpose such as materials for house building. Wood, cement, aggregates, metals, bricks, concrete, clay are the most common type of building material used in the state of the art of construction. The choice of these are generally based on their cost effectiveness for building projects. Many naturally occurring substances, such as clay, sand, wood and rocks, even twigs and leaves have been used to construct buildings. Apart from naturally occurring materials, many man-made products are in use, some more and some less synthetic.

The manufacture of building materials is an established industry in many countries and the use of these materials is typically segmented into specific construction areas, such as carpentry, plumbing, roofing, insulation works, ecc.

Construction materials can be generally categorized into two sources, natural and derived from the petrochemical industry, or also defined as synthetic. Natural materials are those that are unprocessed or minimally processed by industry, such as lumber, cork, stone cladding, ecc.. The natural materials are healthier as they do not spread hazardous substances in the build environment. In addition most of the natural materials are yearly renewable, they regenerate making part of the circular economy and not do produce hazardous waste, but instead, at the end of its lifecycle vanish in the nature. Few of the materials that can be found on the international market are 100% natural. Synthetic materials are made in industrial settings after much human manipulations, such as plastics and petroleum based paints. Most commonly these materials derived from virgin resources that are not renewable.

Mud, stone, and fibrous plants are the most basic materials, People all over the world have used these three materials together to create homes to suit their local weather conditions. These natural materials are used from ancient ages in the traditional architecture and have proven technical and esthetical characteristics.

In general, stone and/or brush are used as basic structural components in these buildings, while mud is used to fill in the space between, acting as a type of concrete and insulation. In Africa for example mud is used also for basic structural components.

Today the state of the art includes all kinds of building materials, but most common in use are brick and block, concrete, metal and glass. A brick is a block made of kiln-fired material, usually clay or shale, but also may be of lower quality mud, etc. Clay bricks are formed in a molding (the soft mud method), or in commercial manufacture more frequently by extruding clay through a die and then wire-cutting them to the proper size (the stiff mud process). Concrete is a composite building material made from the combination of aggregate (composite) and a binder such as cement. The most common form of concrete is Portland cement concrete, which consists of mineral aggregate (generally gravel and sand), portland cement and water.

Metal is used as structural framework for larger buildings such as skyscrapers, or as an external surface covering. There are many types of metals used for building. Steel is a metal alloy whose major component is iron,and is the usual choice for metal structural construction. It is strong, flexible, and if refined well and/or treated lasts a long time. Corrosion is metal's prime enemy when it comes to longevity. In recent years more and more wood high rise buildings are constructed worldwide, due to the technical qualities of the material, the low embodied energy, the renewability of the material and the fact that wood is not hazardous waste product.

Clear windows have been used since the invention of glass to cover small openings in a building. They provided humans with the ability to both let light into rooms while at the same time keeping inclement weather outside. Glass is generally made from mixtures of sand and silicates, and is very brittle. Modern glass "curtain walls" can be used to cover the entire facade of a building. Glass can also be used to span over a wide roof structure in a "space frame".

Modem building is a multibillion dollar industry, and the production and harvesting of raw materials for building purposes is on a worldwide scale. Often being a primary governmental and trade key point between nations. Environmental concerns are also becoming a major world topic concerning the availability and sustainability of certain materials, and the extraction of such large quantities needed for the human habitat. The construction sector is the third most polluting sector worldwide, responsible for 40% of the energy consumption, produces 36% of the CO2 released in the air, uses 50% of the raw materials and utilize 21% of the world drinkable water.

The list of building products exclusively exclude the materials, which are used to construct the building architecture and supporting fixtures like windows, doors, cabinets, etc. Today many people that are building or remodeling their houses choose to use eco-friendly building materials. An eco-friendly building material is one that increases the efficiency of energy used and reduces impact on human well-being and the environment. There are many different materials that can be used in the construction industry that are eco-friendly; from foundation, to insulation, to interior and exterior wall finishes, flooring, and countertop materials.

An eco-friendly building material describes a product that has been designed to do the least possible damage to the environment. Typically eco-friendly construction means it consist of two parts - Material and Technique.

A material by itself can be eco-friendly, e.g. Bamboo.

Or even conventional materials can become eco-friendly based on the construction technique that is used. e.g. rat trap bond developed by Lauri Baker, which require less number of bricks and are more heat insulating than normal walls and therefore eco-friendly.

The various properties of the Eco-friendly materials and techniques are:
- renewability,
- reuse of waste products, reuse, recycle
- embodied energy
- local availability
- reduction of pollution (air, land, water), biodegradable
- durability and energy efficiency
- CO2 sequestration
healthy / wholesome for human.lt is difficult to get a material that has all these properties, and it thus becomes a comparative assessment to identify eco-friendly materials.

Therefore, it is an object of the present invention to provide a system and a method for the production of eco-friendly construction materials which has most of the a.m. properties, are simple to produce, simple to handle and provides a very positive environmental, economic and social balance and is adaptable to new construction methods. This new virtues cycle creates new economies and activates local territories, transforming a residual into a source of value.

The solution is provided by a system for the production of eco-friendly construction materials with the features of claim 1. Further features and advantages become aware from the respective sub-claims. Furthermore, a solution is provided with regard to a method for the production of eco-friendly construction materials with features of claim 11. Further features and advantages become aware by the respective sub-claims. Further the material is claimed in claim 16.

According to the invention the most important aspect is to use a filler which consists of different residual materials from rice production. Those are rice straw, rice husk, rice bran and the like. In general all kind of a rice residuals can be used. Together with typical basic mixtures for a mortar or a plaster as well as a finery like water and lime, and clay if required these materials can be used as a eco-friendly filler. A profit binder is used to produce a homogeneous construction material. This includes the different rice materials providing the required strength as well as insulation features and the like.

These construction materials can be used for the different construction purposes. Bricks can be pre-fabricated and used as bricks to build the walls. The material can be used as a plaster to cover e. g. rice straw walls, finishing's, screeds, ecc.. This provides a high degree of thermal insulation, sound insulation and the like. A finery can provide a perfect optical surface and brings esthetical characteristic to the material. This can be colored e. g. using the boiling water of venus rice. This is a hybrid made from a black rice and an Italian local rice. It is known under "riso venere". In addition, other natural colorants are used, based on the requirement.

An advantage of the present invention is that the system can be used by producing different premixtures which can be mixed together with water and the respective amounts of lime and binder produced to a construction material on sight. Rice residuals and if required clay can be premixed and delivered to the construction site. Additionally, binder in dry form can be filled into the premix.

Additional additives, depending on the respective intended use can be clay, wax, silica sand, pumice pearls, glass fiber and the like. Depending on whether the construction material is planned for internal or external use the different ingredients can provide the respective properties. Additionally, the ash from the combustion of rice products, rice chaff, rice husk, rice straw and the like, can be used as an additive.

The different properties provided by the additives are
- wax > impermeability and water repellency
- silica sand > density and volume
- pumice pearls > lightness and volume
- glass fiber > mechanical strength
- ash from combustion of rice products > material that triggers chemical reaction with the clay and they clay reacts
- micronized carbonid powders > additive and accelerator of the chemical reaction
- methyl cellulose > water repellency, jellying agent
- lincid oil > thinner

The different pre mixtures for the different fields of use can be delivered to the site. Additionally clay will be used to produce mortar, plaster and the like.

According to the method the pre mixtures can then be added by water, lime, lime milk and the like to produce the respective construction material. The material can be mixed to be brought out and dried to make a wall element. The material can be pre formed to bricks and other preforms of wall elements. According to a very advantageously proposal of the invention a mixture of eco-friendly construction material can be brought out by a 3d-printing process. This allows modern applications. Clay will be added as usual according to the requirements and intentions.

The invention provides a system and a method for the production of eco-friendly construction materials. Use these products for the production of construction material results in omitting huge volumes of waste every time rice is harvested. The utilization of the residuals resolve the problem of rice waste, reduces the burned CO2 that derive from the casual burn from the raw materials and includes an agricultural residue in a new productive cycle. Furthermore the products have physical strength and very good installation properties.

A very eco-friendly way to built houses using the inventive system is to install a studding and to fill it with rice straw. The rice straw, after drying in the field, is collected and packed without the application of further treatments or the addition of unnatural additives. The compression of the straw bales is guaranteed thanks to the use of two nylon cords. The procedure of collection and stockage is following a quality protocol.

Rice straw represents the culm of the cereal rice plant once dried at the end of its maturation. Rice straw is similar to wood in terms of chemical composition, being mainly composed of cellulose, lignin, minerals and silicates.

Packaged in a precompressed prismatic shape following a precise procedure. It is an excellent material for achieving the energy efficiency of the building. Its low thermal conductivity value leads to a strong insulating capacity. It guarantees the perfect breathability of the walls in which it is used, in order to prevent superficial condensation and ensuring an excellent comfort in living spaces and a healthier lifestyle. It is extremely good in terms of acoustic insulation and besides, it is a biodegradable material that is renewed annually and it does not generate waste. It is easy to manage on site and site management is similar to other natural building materials.

The embodied energy is far lower than any other material used in construction and, thanks to its CO₂ consumption capacity, it is able to reduce emissions into the atmosphere.

Morever, compared to other straws deriving from other cereals, it has a higher resistance to rottening and mold formation, thanks to its chemical composition and high silica content.

The surface of the rice straw than is covered by mortar, plaster and finery from the inventive system. In that way the material is protected from mold formation. Additionally, the rice straw can be protected with prefabricated panels.

The invention to the more provides a material mixture to establish an eco friendly construction material. The mixture includes an amount of filler material which consists of at least one of rice straw, rice husk, rice husk ashes and/or rice bran. The material mix further consists of the required amounts of lime, water and a binder. Furthermore, the material mix consists of the required amount of clay. Depending on the intended use the material mix may not require to include clay.

Especially for the purpose of 3D printing the material mix includes a filler material which consists of at least two to the rice straw, rice husk, rice husk ashes and/or rice bran. It turned out that the mixture of clay, lime, water, binder can be brought out by a nozzle under pressure to form respective lines of material which, after a certain period of drying can be the carrier for the next line or row. Does the material can be used for 3D printing of walls, wall elements and the like.

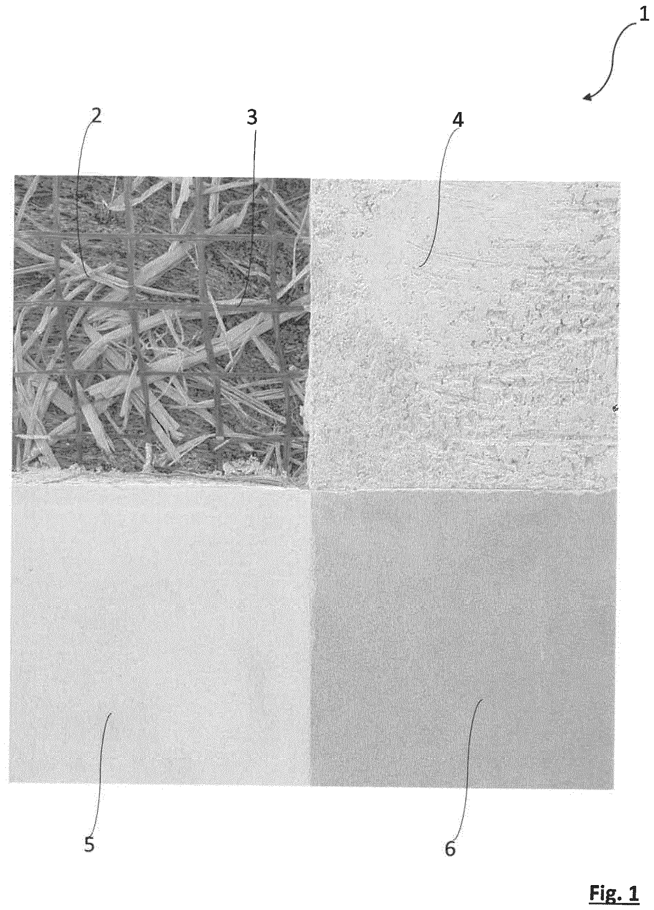

Much more details, features and properties will be disclosed by the following description of several examples. Furthermore, an example for the use of the present invention is shown in a picture in Fig. 1.

### Example 1:

Base coat plaster as a natural blend of lime plaster and rice husk. The bioplaster is a composition based on rice husk, hydraulic lime and pure air lime.

Plaster mortar obtained mixing expertly the most used binder in the history of architecture, air lime, with rice husk - an agricultural product that derive from the husking of paddy rice (raw rice after threshing).

Base coat plaster mixture of both internal and external. It is suitable both for manual installation, as per traditional pose, and plastering machines. For external use marble powder or opus siguinum may be added.

### Example 2:

Finish Coat Plaster is a natural plaster mixture for finishings, in lime and rice chaff, colored in mass, hydrophobized for outdoors.

The bioplaster is a composition based on hydraulic lime and pure air lime and rice husk.

The natural plaster is a high quality finishing that take advantage of the chemical characteristics of rice husk. The latter generates, in combination with lime, marble dusts and earth of natural origin, a material that is very stable to UV rays, resistant to bad weather and with a high humidity evaporation capacity from the existing walls. It is supplied in a pre-packaged mixture, specially formulated for use on external surfaces, in direct contact with atmospheric agents.

### Example 3:

Finishing Plaster is a natural plaster mixture for finishings, in lime and rice chaff, colored in mass, hydrophobized for indoor use.

The bioplaster is a composition based on hydraulic lime and pure air lime and rice husk.

The natural plaster is a high-quality finishing that take advantage of the chemical characteristics of rice husk. The latter generates, in combination with lime, marble dust and earth of natural origin, a material that is very stable to UV rays and with a high humidity evaporation capacity from the existing walls. The finishing plaster can be supplied in a pre-packaged mixture and is suitable specifically for indoor application.

### Example 4:

Base lightweight screed is a mortar for base lightweight screed, used on slabs of various kinds, based on natural lime and rice husk.

The base lightweight screed is a mixture made on site based on lime and rice husk, specifically designed for bases of the screed. It is light, easy to apply and is not eatable for rodents and insects. Designed to create a product that minimizes drying and posing timeline on site.

The screed is a substrate with high thermal-acoustic performance, which can be applied manually or by equipment. The components, mixed before the pose, create a blend that is easy to pose.

It is applied in thicknesses from 5 cm, is light, extremely flexible, breathable, compatible with all types of supports and specific for thermal insulation and reduced load bearing of the slabs.

The material can be used in new construction but is also suitable for thermal and hygrometric renovation of existing buildings. It guarantees excellent acoustic insulation performance.

### Example 5:

A load distribution screed is a polyfunctional lightweight screed used on floors of various kinds, based on natural lime and pumice pearls. Very strong structurally, it is used as a screed for the distributed loads.

The load distribution screed is a mixture/composition made on site, based on lime and pumice stone, specifically designed for natural substrates. It is composed of aerial lime in hydrated form, natural hydraulic lime, pozzolana, pumice stone in granules that are light and have thermo-acoustic insulation, ash of husk and rice straw.

The screed is a natural and ecological substrate with high thermal and acoustic insulation properties, high mechanical resistance, it can be applied manually or by equipment. Its components, mixed before use, create easily applicable compound.

The lightweight screed in lime-pumice is applied in thicknesses from 3cm, it is light, extremely flexible, breathable, compatible with all supports. It is specific for thermal insulation and reduced load capacity, in the bioconstruction and in the renovation of existing buildings. It is ductile and breathable, it is designed for new buildings, but is also suitable for thermal and hygrometric renovation of existing buildings. It guarantees excellent acoustic insulation performance and is therefore optimal in all environments that need to be isolated.

### Example 6:

Plaster in clay as a natural mixture for base plaster based on rice husk, silica sand and clay.

The bioplaster is a composition based on rice husk, selected top quality clay and silica sand.

Mortar plaster obtained by mixing the clay, derived from the mechanical treatment of the rice fields, with the rice husk, an agricultural product that derives from the husking of the paddy rice. The pre-packaged plaster mixture is both for base and finishings. It is suitable both for manual installation, as per traditional pose, and plasters machines. The quality of the products is guaranteed by using uniquely high quality raw materials and selected with wisdom and care. RiceHouse offers a range of products dedicated on the bio construction, environmental sustainability and well-being. The material is a result of careful research and selection of the best natural raw materials, to meet the needs of attentive and sensitive professionals in the sector. In addition, clay is an essential regulator of internal humidity and usually is used for indoor spaces.

### Example 7:

An ecopaint is a mural paint based on long seasoned lime and rice husk for internal and external use, natural and breathable, suitable for new buildings and renovation.

The ecopaint is composed of lime milk, micronized carbonate powders, methylcellulose, linseed oil and rice husk that gives the product good plasticity.

The ecopaint based on lime milk is a line of fine finishes that exploit the chemical characteristics of lime and rice husk. It is supplied white or colored in paste with natural earths in two gammas:
- eco-paint of milk lime for outdoor use
- eco-paint of milk lime for interiors

Thanks to the high pH of natural lime, it has a very good anti-mold action.

As shown in Figure 1 a wall construction 1 is shown by example. It consist of a core of rice straw 2 which is only for the purpose of geometry covered by a net 3. The net 3 is consisting of a fibre of a plant, e.g. rice. The core is first covered by mortar 4 which gives a geometrical boundery for the straw core on one hand and a workable surface on the other hand. It is a given sickness to provide desired insulation property like temperature insulation, sound insulation and the like. However, of course the straw core 2 provides respective insulation properties already, so that the mortar is just adding.

A finery 5 is giving a desired surface so that the wall is basically completed.

However, it is possible to use different fineries, so that e. g. the finery 6 is providing a colored surface.

The given examples and figures are not restricting.

### Reference list

- 1: wall
- 2: rice straw
- 3: net
- 4: mortar
- 5: finery
- 6: finery

## Claims

1. System for the production of eco-friendly construction materials consisting of lime, water, a binder and a filler material as a natural building material, wherein the filler material consists of at least one of rice straw, rice husk, rice husk ashes and/or rice bran.

2. System according to claim 1, **characterized in that** the filler material, the lime and the binder are premixed.

3. System according to any of the preceding claims, **characterized in that** the filler material includes a premix of rice straw and rice husk.

4. System according to any of the preceding claims, **characterized in that** the construction material includes clay.

5. System according to claim 4, **characterized in that** the clay includes rice field clay.

6. System according to any of the preceding claims, **characterized in that** the construction material includes ash from the combustion of rice products.

7. System according to any of the preceding claims, **characterized in that** the construction material includes wax.

8. System according to any of the preceding claims, **characterized in that** the construction material includes silica sand.

9. System according to any of the preceding claims, **characterized in that** the construction material includes pumice pearls.

10. System according to any of the preceding claims, **characterized in that** the construction material includes glass fibre.

11. Method for the production of eco-friendly construction materials including the steps of premixing a filler material as a natural building material, wherein the filler material consists of at least one of rice straw, rice husk, rice husk ashes and/or rice bran and adding the required amount of binder, lime and water on site.

12. Method according to claim 11, **characterized in that** the pre mixture includes the step of adding clay.

13. Method according to any of the preceding claims 11 to 12, **characterized in that** lime is added during the step of the pre mixture.

14. Method according to any of the preceding claims 11 to 13, **characterized in that** lime is added as lime milk.

15. Method according to any of the preceding claims 11 to 14, **characterized in that** the construction material is colored by adding natural colorant, like for example of the rice water from cooking venus "Venere" rice.

16. Eco-friendly construction material consisting of lime, water, a binder and a filler material as a natural building material, wherein the filler material consists of at least one of rice straw, rice husk, rice husk ashes and/or rice bran.
